# EUROPEAN PATENT SPECIFICATION

(11) **EP 3 729 104 B1**
(45) Date of publication and mention of the grant of the patent: **01.03.2023**
(21) Application number: 18827285.0
(22) Date of filing: 14.12.2018
(51) Int. Cl.: G01P 13/00, A01K 1/00, A01K 1/12

(54) **MEASUREMENT SYSTEM FOR A ROTARY MILKING PARLOR, METHOD, COMPUTER PROGRAM FOR CONTROLLING A ROTARY MILKING PARLOR AND NON-VOLATILE DATA CARRIER CONTAINING THE COMPUTER PROGRAM**
MESSSYSTEM FÜR EIN MELKKARUSSELL, VERFAHREN, COMPUTERPROGRAMM ZUR STEUERUNG EINES MELKKARUSSELLS UND NICHTFLÜCHTIGER DATENTRÄGER MIT DEM COMPUTERPROGRAMM
SYSTÈME DE MESURE D'UN POSTE DE TRAITE ROTATIF, PROCÉDÉ, PROGRAMME INFORMATIQUE DE COMMANDE D'UN POSTE DE TRAITE ROTATIF ET SUPPORT DE DONNÉES NON VOLATILE CONTENANT LE PROGRAMME INFORMATIQUE

(30) Priority: 21.12.2017 SE 1751606
(43) Date of publication of application: 28.10.2020
(73) Proprietor: DeLaval Holding AB, 147 21 Tumba (SE)
(72) Inventor: UMEGÅRD, Anders, 147 21 Tumba (SE)
(74) Representative: DeLaval International AB
(86) International application number: PCT/SE2018/051314
(87) International publication number: WO 2019/125288

(56) References cited:
- WO-A1-03/079772
- WO-A1-2008/030116
- WO-A2-2012/149075

## Description

### TECHNICAL FIELD

The present invention relates generally to rotary milking parlors. More particularly the invention relates to a measurement system for a rotary milking parlor and a corresponding method. The invention also relates to a computer program and a non-volatile data carrier.

### BACKGROUND

A rotary milking parlor, also referred to as a rotolocator, enables efficient milking of larger livestocks. The first rotary milking parlor was put into operation in 1930. Since then, the basic technical concept has been gradually refined. To ensure consistent operation and achieve long operating life, it is important to monitor the movable platform's function.

There exist various solutions for measuring the platform's performance during operation. For example, US 2010/0147221 describes an apparatus and methods for operating a carousel milking facility with a plurality of milking stations, which are arranged on a movable platform. Movement of the platform is determined in relation to a reference point and the position of at least one milking station can be calculated with a position detection device. It is here proposed that a periodic pattern, visual and/or magnetic, is arranged on the outer periphery of a carousel, where the local height of the line and angle on the carousel can be assigned unequivocally by determining the height of the line with the aid of an optical and/or magnetic sensor.

Although this design may be able to determine the platform's position relatively accurately, no information about performance quality or mechanical health is provided.

Similar rotary milking parlors are known from documents WO2008/030116 A1, WO2012/149075 A2 and WO03/079772 A1.

### SUMMARY

The object of the present invention is therefore to solve the above problem and offer an improved measurement solution for a rotary milking parlor.

According to one aspect of the invention, the object is achieved by a measurement system for a rotary milking parlor with a movable platform. The measurement system contains a movement sensor and a receiver.

The movement sensor is arrangeable on the movable platform, and is configured to register micro movements of the movable platform relative to a fix reference frame. To this aim, the movement sensor, in turn, includes a first sensor member configured to perform measurements of displacements in at least one dimension and/or accelerations in at least one dimension. The movement sensor also includes a transmitter configured to emit a wireless sensor signal reflecting the measurements made by the first sensor member. The receiver is configured to receive the wireless sensor signal, and thus allow processing/analysis of said signal.

This control system is advantageous because it enables recording of complex movement patterns by means of a small-sized and rugged sensor. Further, it is straightforward to retrofit the proposed measurement system onto an already existing rotary parlor, hence improving this equipment's chances of a longer service life.

According to the embodiment of this aspect of the invention, the movement sensor is configured to check if an amount of micro movements is below a threshold value. If so, the movement sensor is further configured to emit the wireless sensor signal repeatedly at a first repetition frequency. If, however, the amount of micro movements is equal to or above the threshold value, the movement sensor is configured to emit the wireless sensor signal repeatedly at a repetition frequency above the first repetition frequency. Thereby, the emitted data quantity per unit time can be adapted to the amount of micro movements, such that whenever there are larger movements, the wireless sensor signal is emitted relatively often, and vice versa.

According to another embodiment of this aspect of the invention, the movement sensor is further configured to check if the amount of micro movements of the movement sensor transitions from below the threshold value to above the threshold value. If so, the movement sensor is further configured emit the wireless sensor signal from the movement sensor repeatedly at a second repetition frequency, and provided that, during a predetermined interval thereafter the amount of micro movements of the movement sensor is above the threshold value, continue to emit the wireless sensor signal from movement sensor repeatedly at the second repetition frequency until expiry of the predetermined interval. Thereafter, the movement sensor is configured to emit the wireless sensor signal from the movement sensor repeatedly at a third repetition frequency between the first and second repetition frequencies as long as the amount of micro movements of the movement sensor remains above the threshold value. Moreover, if the amount of micro movements of the movement sensor transitions from above the threshold value to below the threshold value, the movement sensor is configured to emit the wireless sensor signal from the movement sensor repeatedly at the first repetition frequency. As a result, the emission of measurement data can even better adapted to when the registering of such data is most important, namely in connection with starting from a stand-still. During the subsequent rotation, however, it is less critical to collect measurement data, and therefore the repetition frequency can be reduced.

According to still another embodiment of this aspect of the invention, a processing unit is included, which is configured to derive operation-related information based on the wireless sensor signal received by the receiver. For example, in response thereto, a behavior of the rotary milking parlor may be caused to vary. Consequently, among other things, the operation of the movable platform can be adapted to how many animals are located thereon.

According to still another embodiment of this aspect of the invention, the processing unit is configured to store a series of measurement values representing the wireless sensor signal received over an interval of time. Based on the series of measurement values, the processing unit is further configured to derive a movement signature of the movable platform. The movement signature, in turn, may reflect a start behavior, a stop behavior, vibrations, oscillations and/or load variations. Thereby, by studying the movement signature it is relatively uncomplicated to conclude whether or not the rotary milking parlor is free from errors, for instance by comparing the movement signature to a nominal profile.

According to further embodiments of this aspect of the invention, the movement sensor also contains a second sensor member. Either this sensor member is configured to measure displacements and/or accelerations in at least one dimension being independent from the at least one dimension in which the first sensor member is configured to measure displacements and/or accelerations respectively; or both the first and second sensor members are configured to measure displacements and/or accelerations in three dimensions. In any case, the wireless sensor signal emitted from the movement sensor reflects the measurements made by the second sensor member as well as the first sensor member. Such a second sensor member is advantageous because it both enhances the data quality and provides redundancy in the design.

According to another aspect of the invention, the object is achieved by a method of measuring the movements of a rotary milking parlor. The method involves: registering micro movements of the movable platform relative to a fix reference frame via a movement sensor arranged on the movable platform; measuring, via a first sensor member in the movement sensor, displacements in at least one dimension and/or accelerations in at least one dimension; emitting, via a transmitter in the movement sensor, a wireless sensor signal reflecting the measurements of the first sensor member; and receiving, via a receiver, the wireless sensor signal. The advantages of this method, as well as the preferred embodiments thereof, are apparent from the discussion above with reference to the proposed control system and rotary milking parlor.

According to a further aspect of the invention the object is achieved by a computer program loadable into a non-volatile data carrier communicatively connected to a processing unit. The computer program includes software for executing the above method when the program is run on the processing unit.

According to another aspect of the invention the object is achieved by a non-volatile data carrier containing the above computer program.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: shows an example of a measurement system for a rotary milking parlor according to one embodiment of the invention;
- Figure 2: shows a first diagram exemplifying how a repetition frequency of a wireless sensor signal may vary over time in response to a registered amount
- Figure 3: of micro movements of the movable platform; shows a second diagram exemplifying how an amount of micro movements of the movable platform varies over time; and
- Figure 4: illustrates, by means of a flow diagram, the general method according to the invention of measuring the movements of a movable platform of a rotary milking parlor.

### DETAILED DESCRIPTION

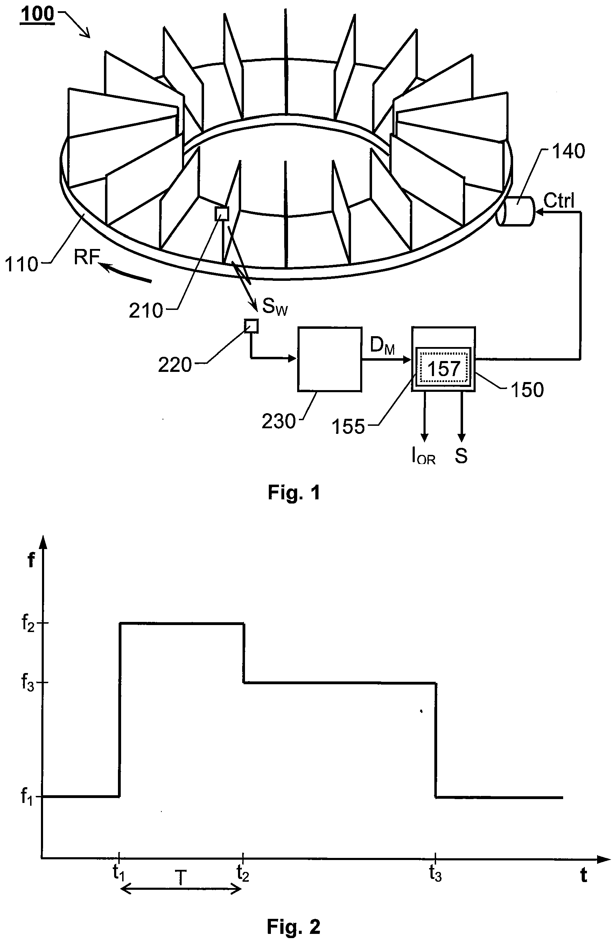

Figure 1 shows an example of a rotary milking parlor 100 with a movable platform 110 together with a measurement system according to one embodiment of the invention. The measurement system contains a movement sensor 210 and a receiver 230.

The movement sensor 210 is arranged on the movable platform 110, and the movement sensor 210 is configured to register micro movements of the movable platform 110 relative to a fix reference frame, e.g. the earth. The movement sensor 210, in turn, includes a first sensor member and a transmitter. The first sensor member is configured to perform measurements of displacements in at least one dimension and/or accelerations in at least one dimension. Consequently, the first sensor member may be equipped with one or more gyroscopes, accelerometers and/or IMUs (inertial measurement units). The transmitter is configured to emit a wireless sensor signal Sw reflecting the measurements made by the first sensor member. The wireless sensor signal Sw may be represented by a radio signal of relatively high frequency, e.g. in the ultra-wideband spectrum. However, according to the invention, any other kind of wireless signal is conceivable, for instance an optical, inductive or ultrasonic signal.

The receiver 230 is configured to receive the wireless sensor signal Sw via an antenna 220. Preferably, the receiver 230 is further arranged to forward measurement data D_{M} corresponding to the wireless sensor signal Sw for analysis. Therefore, according to one embodiment of the invention, the measurement system also contains a processing unit 150 configured to derive operation-related information I_{OR} based on the wireless sensor signal Sw that has been received by the receiver 230. For example, the processing unit 150 may be further configured to cause a behavior of the rotary milking parlor 100 to vary in response to the operation-related information I_{OR}. In such a case, the processing unit 150 is configured to generate a control signal Ctrl, which is fed to a drive unit 140 that adjusts a rotation speed and/or direction RF for the movement of the movable platform 110.

Referring now to Figure 2, we see a diagram over how a repetition frequency f of the wireless sensor signal Sw may vary over time t in response to a registered amount of micro movements of the movable platform 110.

Here, we assume that the movable platform 110 is stationary until a first point in time t₁ at which the movable platform 110 starts to rotate, and as a result the amount of micro movements increases above the threshold value. Thus, up until the first point in time t₁ the movement sensor 210 emits the wireless sensor signal Sw at a relatively low first repetition frequency f₁, say 0-3 Hz. Then, as of the first point in time t₁, the movement sensor 210 emits the wireless sensor signal Sw at a second repetition frequency f₂, which is higher than first repetition frequency f₁; say f₂ equals 10-15 Hz.

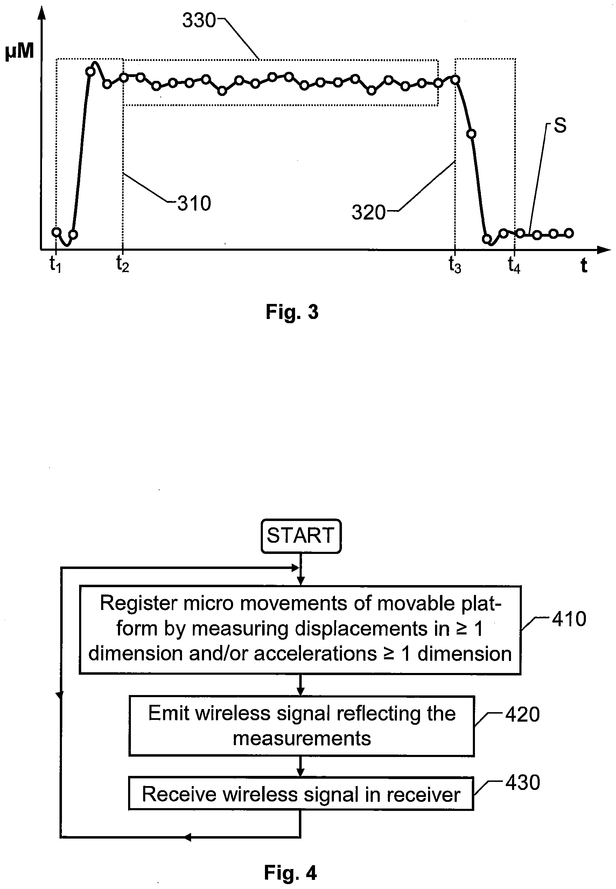

Provided that, during a predetermined interval T thereafter the amount of micro movements of the movement sensor 210 remains above the threshold value, the movement sensor 210 continues to emit the wireless sensor signal Sw repeatedly at the second repetition frequency f₂ until expiry of the predetermined interval T. In the example illustrated in Figure 3, the predetermined interval T expires at a second point in time t₂; and here, the movement sensor 210 starts to emit the wireless sensor signal Sw repeatedly at a third repetition frequency f₃, whose magnitude is between that of the first and second repetition frequencies f₁ and f₂ respectively, say f₃ equals 5-8 Hz. Thereafter, i.e. as of the third point in time t₃, the movement sensor 210 continues to emit the wireless sensor signal Sw at the third repetition frequency f₃, as long as the amount of micro movements exceeds the threshold value. This procedure is advantageous because it provides valuable measurement data in connection with starting the movable platform 110. At the same time, energy is economized during continuous operation.

Figure 3 shows a diagram exemplifying how an amount of micro movements µM) of the movable platform 110 varies over time t. Here, the points in time t₁, t₂ and t₃ correspond to the points in time referred to above. Thus, at the first point in time t₁, we assume that the movable platform 110 begins to rotate after having stood still. As a result, the amount of micro movements µM) increases dramatically until around the second point in time t₂, when steady-state rotation has been achieved. Then, as of the second point in time t₂ until the third point in time t₃, we assume that the movable platform 110 continues to rotate at an approximately constant speed. Therefore, the amount of micro movements µM) remains comparatively constant at a high level. At the third point in time t₃, the movable platform 110 is again brought to a halt. Thus, shortly thereafter, the amount of micro movements µM) drops to a fairly low level, and at a fourth point in time t₄, the movable platform 110 stands still again.

According to one embodiment of the invention, the processing unit 150 is further configured to store a series of measurement values representing the wireless sensor signal Sw received over an interval of time. For example, the processing unit 150 may store the series of measurement values represented by the amount of micro movements µM) in the diagram of Figure 3. Then, based on the series of measurement values, the processing unit 150 is configured to derive a movement signature S of the movable platform 110.

The movement signature S may reflect a start behavior 310 and a stop behavior 320, as well as any vibrations/oscillations 330 registered between the start and stop behaviors 310 and 320 respectively. Additionally, the movement signature S may reflect variations in the load on the movable platform 110 (not illustrated in Figure 3), typically caused by different numbers of animals being located on the movable platform 110.

According to one embodiment of the invention, in addition to the first sensor member, the movement sensor 210 also contains a second sensor member, which is configured to perform measurements of displacements and/or accelerations in at least one dimension being independent from the at least one dimension in which the first sensor member is configured to measure displacements and/or accelerations. In other words, if the first sensor member is configured to measure displacements of the movable platform 110 in a vertical direction (i.e. in a direction essentially parallel to the earth's field of gravity), the second sensor member may be configured to measure lateral displacements of the movable platform 110.

Alternatively, the movement sensor 210 may contain first and second sensor members, which are both configured to perform measurements of displacements in three dimensions and/or accelerations in three dimensions. Accordingly, the second sensor member produces data that are redundant in relation to what is produced by the first sensor member. As yet another alternative, the movement sensor 210 may contain a first sensor member configured to perform measurements of displacements in three dimensions and a second sensor member configured to perform measurements of accelerations in three dimensions. Thus, no redundant measurement data are produced.

In any case, if the movement sensor 210 contains first and second sensor members, the wireless sensor signal Sw emitted therefrom reflects the measurements made by both these sensor members.

It is generally advantageous if the above-described processing unit 150 is configured to effect the procedure in an automatic manner, for instance by executing a computer program 157. Therefore, the processing unit 150 may be communicatively connected to a memory unit, i.e. non-volatile data carrier 155, storing the computer program 157, which, in turn, contains software for making at least one processor in the processing unit 150 execute the above-described actions when the computer program 157 is run in the processing unit 150.

In order to sum up, and with reference to the flow diagram in Figure 4, we will now describe the general method according to the invention of measuring the movements of a movable platform of a rotary milking parlor.

In a first step 410, micro movements of a movable platform of a rotary milking parlor are registered relative to a fix reference frame. The micro movements are registered via a movement sensor arranged on the movable platform, which movement sensor has a sensor member measuring displacements in at least one dimension and/or accelerations in at least one dimension.

Then, in a step 420, a wireless sensor signal is emitted which reflects the measurements. Subsequently, the wireless sensor signal is received in a receiver, and thereafter, the procedure loops back to step 410.

Preferably, although illustrated as discrete steps in Figure 4, the steps 410 to 430 are effected sequentially and yet simultaneously, so that for example while the wireless sensor signal is received in step 430 in respect of micro movements registered at a particular point in time, the wireless sensor signal is receive in step 430 in respect of micro movements registered at a somewhat earlier point in time.

All of the process steps, as well as any sub-sequence of steps, described with reference to Figure 4 may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. However, the term does not preclude the presence or addition of one or more additional features, integers, steps or components or groups thereof.

The invention is not restricted to the described embodiments in the figures, but may be varied freely within the scope of the claims.

## Claims

1. A measurement system for a rotary milking parlor (100) with a movable platform (110), the measurement system comprising:
a movement sensor (210) arrangeable on the movable platform (110), the movement sensor (210) being configured to register micro movements (µM) of the movable platform (110) relative to a fix reference frame, wherein the movement sensor (210) comprises:
a first sensor member configured to perform measurements of at least one of:
displacements in at least one dimension, and
accelerations in at least one dimension; and the movement sensor (210) further comprises a transmitter configured to emit a wireless sensor signal (S_{W}) reflecting the measurements made by the first sensor member; and
the measurement system comprises a receiver (230) configured to receive the wireless sensor signal (S_{W}), **characterized in that** the movement sensor (210) is configured to:
check if an amount of micro movements (µM) is below a threshold value, and if so
emit the wireless sensor signal (S_{W}) repeatedly at a first repetition frequency (f₁), and if the amount of micro movements (µM) is equal to or above the threshold value emit the wireless sensor signal (S_{W}) repeatedly at a repetition frequency (f₂, f₃) above the first repetition frequency (f₁).

2. The measurement system according to claim 1, wherein the movement sensor (210) is further configured to:
check if the amount of micro movements (µM) of the first transmitter unit (210) transitions from below the threshold value to above the threshold value and if so
emit the wireless sensor signal (S_{W}) from the movement sensor (210) repeatedly at a second repetition frequency (f₂), and provided that, during a predetermined interval (T) thereafter the amount of micro movements (µM) of the movement sensor (210) is above the threshold value
continue to emit the wireless sensor signal (S_{W}) from movement sensor (210) repeatedly at the second repetition frequency until expiry of the predetermined interval (T), and thereafter
emit the wireless sensor signal (S_{W}) from the movement sensor (210) repeatedly at a third repetition frequency (f₃) between the first and second repetition frequencies (f₁, f₂) as long as the amount of micro movements (µM) of the movement sensor (210) remains above the threshold value, and if the amount of micro movements (µM) of the movement sensor (210) transitions from above the threshold value to below the threshold value
emit the wireless sensor signal (S_{W}) from the movement sensor (210) repeatedly at the first repetition frequency (f₁).

3. The measurement system according to any one of the preceding claims, further comprising:
a processing unit (150) configured to derive operation-related information (I_{OR}) based on the wireless sensor (S_{W}) signal received by the receiver (230).

4. The measurement system according to claim 3, wherein the processing unit (150) is further configured to cause a behavior of the rotary milking parlor (100) to vary in response to the operation-related information (I_{OR}).

5. The measurement system according to any one of claims 3 or 4, wherein the processing unit (150) is further configured to:
store a series of measurement values representing the wireless sensor signal (S_{W}) received over an interval of time, and
derive a movement signature (S) of the movable platform (110) based on the series of measurement values.

6. The measurement system according to claim 5, wherein the measurement system is configured such that the movement signature (S) reflects at least one of:
a start behavior (310), a stop behavior (320), vibrations, oscillations (330), and load variations.

7. The measurement system according to any one of the preceding claims, wherein the movement sensor (210) comprises:
a second sensor member configured to perform measurements of at least one of:
displacements in at least one dimension being independent from the at least one dimension in which the first sensor member is configured to measure displacements, and
accelerations in at least one dimension being independent from the at least one dimension in which the first sensor member is configured to measure accelerations; and
the wireless sensor signal (S_{W}) emitted from the movement sensor (210) further reflects the measurements made by the second sensor member.

8. The measurement system according to any one of claims 1 to 6, wherein:
the movement sensor (210) comprises a second sensor member;
the first and second sensor members are configured to perform measurements of at least one of: displacements in three dimensions, and accelerations in three dimensions; and
the wireless sensor signal (S_{W}) emitted from the measure movement sensor (210) further reflects the measurements made by the second sensor member.

9. A method of measuring the movements of a movable platform (110) included in a rotary milking parlor (100), the method comprising:
registering micro movements (µM) of the movable platform (110) relative to a fix reference frame via a movement sensor (210) arranged on the movable platform (110),
measuring, via a first sensor member in the movement sensor (210), at least one of: displacements in at least one dimension, and accelerations in at least one dimension;
emitting, via a transmitter in the movement sensor (210), a wireless sensor signal (S_{W}) reflecting the measurements of the first sensor member; and
receiving, via a receiver (230), the wireless sensor signal (S_{W}), **characterized by**
checking if an amount of micro movements (µM) is below a threshold value, and if so
emitting the wireless sensor signal (S_{W}) repeatedly at a first repetition frequency (f₁), and if the amount of micro movements (µM) is equal to or above the threshold value
emitting the wireless sensor signal (S_{W}) repeatedly at a repetition frequency (f₂, f₃) above the first repetition frequency (f₁).

10. The method according to claim 9, further comprising:
checking if the amount of micro movements (µM) of the movement sensor (210) transitions from below the threshold value to above the threshold value and if so
emitting the wireless sensor signal (S_{W}) from the movement sensor (210) repeatedly at a second repetition frequency (f₂), and provided that, during a predetermined interval (T) thereafter the amount of micro movements (µM) of the movement sensor (210) is above the threshold value
continuing to emit the wireless sensor signal (S_{W}) from movement sensor (210) repeatedly at the second repetition frequency until expiry of the predetermined interval (T), and thereafter
emitting the wireless sensor signal (S_{W}) from the movement sensor (210) repeatedly at a third repetition frequency (f₃) between the first and second repetition frequencies (f₁, f₂) as long as the amount of micro movements (µM) of the movement sensor (210) remains above the threshold value, and if the amount of micro movements (µM) of the movement sensor (210) transitions from above the threshold value to below the threshold value
emitting the wireless sensor signal (S_{W}) from the movement sensor (210) repeatedly at the first repetition frequency (f₁).

11. The method system according to any one of claims 9 to 10, further comprising:
deriving operation-related information (I_{OR}) based on the wireless sensor signal (S_{W}) received by the receiver (230).

12. The method according to claim 11, further comprising:
varying a behavior of the rotary milking parlor (100) in response to the operation-related information (I_{OR}).

13. The method according to any one of claims 11 or 12, further comprising:
storing a series of measurement values representing the wireless sensor signal (S_{W}) received over an interval of time, and
deriving a movement signature (S) of the movable platform (110) based on the series of measurement values.

14. The method according to claim 13, wherein the movement signature reflects at least one of:
a start behavior, a stop behavior, vibrations, oscillations, and load variations.

15. The method according to any one of the claims 9 to 14, comprising:
measuring, via a second sensor member in the movement sensor (210), at least one of:
displacements in at least one dimension being independent from the at least one dimension in which the first sensor member is configured to measure displacements, and
accelerations in at least one dimension being independent from the at least one dimension in which the first sensor member is configured to measure accelerations; and the wireless sensor signal (S_{W}) emitted from the movement sensor (210) further reflecting the measurements of the second sensor member.

16. The method according to claim 15, comprising:
measuring, via the first and second sensor members, at least one of: displacements in three dimensions, and accelerations in three dimensions.

17. A computer program (157) loadable into a non-volatile data carrier (155) communicatively connected to a processing unit (150) of a measurement system, the computer program (157) comprising software for executing the method according any of the claims 9 to 16 when the computer program (157) is run on the processing unit (150) of the measurement system.

## Patentansprüche

1. Messsystem für ein Melkkarussell (100) mit einer bewegbaren Plattform (110), das Messsystem umfassend:
einen Bewegungssensor (210), der auf der bewegbaren Plattform (110) angeordnet werden kann, wobei der Bewegungssensor (210) konfiguriert ist, um Mikrobewegungen (µM) der bewegbaren Plattform (110) relativ zu einem festen Referenzrahmen zu registrieren, wobei der Bewegungssensor (210) umfasst:
ein erstes Sensorelement, das konfiguriert ist, um Messungen durchzuführen von mindestens einem von:
Verschiebungen in mindestens einer Dimension, und
Beschleunigungen in mindestens einer Dimension; und der Bewegungssensor (210) ferner einen Sender umfasst, der konfiguriert ist, um ein drahtloses Sensorsignal (S_{w}) zu emittieren, das die Messungen reflektiert, die durch das erste Sensorelement gemacht werden; und
das Messsystem einen Empfänger (230) umfasst, der konfiguriert ist, um das drahtlose Sensorsignal (S_{w}) zu empfangen, **dadurch gekennzeichnet, dass** der Bewegungssensor (210) konfiguriert ist zum:
Überprüfen, ob ein Betrag von Mikrobewegungen (µM) unter einem Schwellenwert liegt, und falls ja
wiederholtes Emittieren des drahtlosen Sensorsignals (S_{w}) bei einer ersten Wiederholungsfrequenz (f₁) und falls der Betrag der Mikrobewegungen (µM) gleich oder über dem Schwellenwert liegt
wiederholtes Emittieren des drahtlosen Sensorsignals (S_{w}) bei einer Wiederholungsfrequenz (f₂, f₃) über der ersten Wiederholungsfrequenz (f₁).

2. Messsystem nach Anspruch 1, wobei der Bewegungssensor (210) ferner konfiguriert ist zum:
Überprüfen, ob der Betrag der Mikrobewegungen (µM) der ersten Sendeeinheit (210) von unter dem Schwellenwert zu über dem Schwellenwert übergeht und falls ja
wiederholtes Emittieren des drahtlosen Sensorsignals (S_{w}) von dem Bewegungssensor (210) bei einer zweiten Wiederholungsfrequenz (f₂) und vorausgesetzt, dass während eines vorbestimmten Intervalls (T) danach, der Betrag der Mikrobewegungen (µM) des Bewegungssensors (210) über dem Schwellenwert liegt
Fortsetzen, das drahtlose Sensorsignal (S_{w}) von dem Bewegungssensor (210) bei der zweiten Wiederholungsfrequenz bis zu einem Ablauf des zuvor bestimmten Intervalls (T) wiederholt zu emittieren, und danach
wiederholtes Emittieren des drahtlosen Sensorsignals (S_{w}) von dem Bewegungssensor (210) bei einer dritten Wiederholungsfrequenz (f₃) zwischen der ersten und der zweiten Wiederholungsfrequenz (f₁, f₂), solange der Betrag der Mikrobewegungen (µM) des Bewegungssensors (210) über dem Schwellenwert bleibt, und falls der Betrag der Mikrobewegungen (µM) des Bewegungssensors (210) von über dem Schwellenwert zu unter dem Schwellenwert übergeht
wiederholtes Emittieren des drahtlosen Sensorsignals (S_{w}) von dem Bewegungssensor (210) bei der ersten Wiederholungsfrequenz (f₁).

3. Messsystem nach einem der vorstehenden Ansprüche, ferner umfassend:
eine Verarbeitungseinheit (150), die konfiguriert ist, um betriebsbezogene Informationen (I_{OR}) basierend auf drahtlosen Sensor(S_{w})-Signalen abzuleiten, die durch den Empfänger (230) empfangen werden.

4. Messsystem nach Anspruch 3, wobei die Verarbeitungseinheit (150) ferner konfiguriert ist, um ein Verhalten des Melkkarussells (100) zu bewirken, um als Reaktion auf die betriebsbezogenen Informationen (I_{OR}) zu variieren.

5. Messsystem nach einem der Ansprüche 3 oder 4, wobei die Verarbeitungseinheit (150) ferner konfiguriert ist zum:
Speichern einer Reihe von Messwerten, die das drahtlose Sensorsignal (S_{w}) darstellen, das über ein Zeitintervall empfangen wird, und
Ableiten einer Bewegungssignatur (S) der bewegbaren Plattform (110) basierend auf der Reihe von Messwerten.

6. Messsystem nach Anspruch 5, wobei das Messsystem derart konfiguriert ist, dass die Bewegungssignatur (S) mindestens eines reflektiert von:
einem Startverhalten (310), einem Stoppverhalten (320), Vibrationen, Schwingungen (330) und Lastvariationen.

7. Messsystem nach einem der vorstehenden Ansprüche, wobei der Bewegungssensor (210) umfasst:
ein zweites Sensorelement, das konfiguriert ist, um Messungen durchzuführen von mindestens einem von:
Verschiebungen in mindestens einer Dimension, die unabhängig von der mindestens einen Dimension sind, in der das erste Sensorelement konfiguriert ist, um Verschiebungen zu messen, und
Beschleunigungen in mindestens einer Dimension, die unabhängig von der mindestens einen Dimension sind, in der das erste Sensorelement konfiguriert ist, um Beschleunigungen zu messen; und
das drahtlose Sensorsignal (S_{w}), das von dem Bewegungssensor (210) emittiert wird, das ferner die Messungen reflektiert, die durch das zweite Sensorelement gemacht werden.

8. Messsystem nach einem der Ansprüche 1 bis 6, wobei:
wobei der Bewegungssensor (210) ein zweites Sensorelement umfasst:
das erste und das zweite Sensorelement konfiguriert sind, um Messungen von mindestens einem durchzuführen von: Verschiebungen in drei Dimensionen und Beschleunigungen in drei Dimensionen; und
das drahtlose Sensorsignal (S_{w}), das von dem Bewegungssensor (210) emittiert wird, das ferner die Messungen reflektiert, die durch das zweite Sensorelement gemacht werden.

9. Verfahren zum Messen der Bewegungen einer bewegbaren Plattform (110), die in einem Melkkarussell (100) beinhaltet ist, das Verfahren umfassend:
Registrieren von Mikrobewegungen (µM) der bewegbaren Plattform (110) relativ zu einem festen Referenzrahmen über einen Bewegungssensor (210), der auf der bewegbaren Plattform (110) angeordnet ist,
Messen, über ein erstes Sensorelement in dem Bewegungssensor (210), von mindestens einem von: Verschiebungen in mindestens einer Dimension und Beschleunigungen in mindestens einer Dimension;
Emittieren, über einen Sender in dem Bewegungssensor (210), eines drahtlosen Sensorsignals (S_{w}), das die Messungen des ersten Sensorelements reflektiert; und
Empfangen, über einen Empfänger (230), des drahtlosen Sensorsignals (S_{w}), **gekennzeichnet durch**
Überprüfen, ob ein Betrag von Mikrobewegungen (µM) unter einem Schwellenwert liegt, und falls ja
wiederholtes Emittieren des drahtlosen Sensorsignals (S_{w}) bei einer ersten Wiederholungsfrequenz (f₁) und falls der Betrag der Mikrobewegungen (µM) gleich oder über dem Schwellenwert liegt
wiederholtes Emittieren des drahtlosen Sensorsignals (S_{w}) bei einer Wiederholungsfrequenz (f₂, f₃) über der ersten Wiederholungsfrequenz (f₁).

10. Verfahren nach Anspruch 9, ferner umfassend:
Überprüfen, ob der Betrag der Mikrobewegungen (µM) des Bewegungssensors (210) von unter dem Schwellenwert zu über dem Schwellenwert übergeht und falls ja
wiederholtes Emittieren des drahtlosen Sensorsignals (S_{w}) von dem Bewegungssensor (210) bei einer zweiten Wiederholungsfrequenz (f₂) und vorausgesetzt, dass während eines zuvor bestimmten Intervalls (T) danach der Betrag der Mikrobewegungen (µM) des Bewegungssensors (210) über dem Schwellenwert liegt
Fortsetzen, das drahtlose Sensorsignal (S_{w}) von dem Bewegungssensor (210) bei der zweiten Wiederholungsfrequenz bis zu dem Ablauf des vorbestimmten Intervalls (T) wiederholt zu emittieren, und danach
wiederholtes Emittieren des drahtlosen Sensorsignals (S_{w}) von dem Bewegungssensor (210) bei einer dritten Wiederholungsfrequenz (f₃) zwischen der ersten und der zweiten Wiederholungsfrequenz (f₁, f₂), solange der Betrag der Mikrobewegungen (µM) des Bewegungssensors (210) über dem Schwellenwert bleibt, und falls der Betrag der Mikrobewegungen (µM) des Bewegungssensors (210) von über dem Schwellenwert zu unter dem Schwellenwert übergeht
wiederholtes Emittieren des drahtlosen Sensorsignals (S_{w}) von dem Bewegungssensor (210) bei der ersten Wiederholungsfrequenz (f₁).

11. Verfahren nach einem der Ansprüche 9 bis 10, ferner umfassend:
Ableiten betriebsbezogener Informationen (I_{OR}) basierend auf dem drahtlosen Sensorsignal (S_{w}), das durch den Empfänger (230) empfangen wird.

12. Verfahren nach Anspruch 11, ferner umfassend:
Variieren eines Verhaltens des Melkkarussells (100) in Reaktion auf die betriebsbezogenen Informationen (I_{OR}).

13. Verfahren nach einem der Ansprüche 11 oder 12, ferner umfassend:
Speichern einer Reihe von Messwerten, die das drahtlose Sensorsignal (S_{w}) darstellen, das über ein Zeitintervall empfangen wird, und
Ableiten einer Bewegungssignatur (S) der bewegbaren Plattform (110) basierend auf der Reihe von Messwerten.

14. Verfahren nach Anspruch 13, wobei die Bewegungssignatur mindestens eines reflektiert von:
einem Startverhalten, einem Stoppverhalten, Vibrationen, Schwingungen und Lastvariationen.

15. Verfahren nach einem der Ansprüche 9 bis 14, umfassend:
Messen, über ein zweites Sensorelement in dem Bewegungssensor (210), von mindestens einem von:
Verschiebungen in mindestens einer Dimension, die unabhängig von der mindestens einen Dimension sind, in der das erste Sensorelement konfiguriert ist, um Verschiebungen zu messen, und
Beschleunigungen in mindestens einer Dimension, die unabhängig von der mindestens einen Dimension sind, in der das erste Sensorelement konfiguriert ist, um Beschleunigungen zu messen; und das drahtlose Sensorsignal (S_{w}), das von dem Bewegungssensor (210) emittiert wird, ferner die Messungen des zweiten Sensorelements reflektiert.

16. Verfahren nach Anspruch 15, umfassend:
Messen, über das erste und das zweite Sensorelement, von mindestens einem von: Verschiebungen in drei Dimensionen und Beschleunigungen in drei Dimensionen.

17. Computerprogramm (157), das in einen nichtflüchtigen Datenträger (155) ladbar ist, der mit einer Verarbeitungseinheit (150) eines Messsystems kommunikativ verbunden ist, das Computerprogramm (157) umfassend Software zum Ausführen des Verfahrens nach einem der Ansprüche 9 bis 16, wenn das Computerprogramm (157) auf der Verarbeitungseinheit (150) des Messsystems läuft.

## Revendications

1. Système de mesure pour une salle de traite rotative (100) avec une plateforme mobile (110), le système de mesure comprenant :
un capteur de mouvement (210) pouvant être disposé sur la plateforme mobile (110), le capteur de mouvement (210) étant configuré pour enregistrer des micro-mouvements (µM) de la plateforme mobile (110) par rapport à un cadre de référence fixe, dans lequel le capteur de mouvement (210) comprend :
un premier élément de capteur configuré pour effectuer des mesures d'au moins l'un parmi :
les déplacements dans au moins une dimension, et
des accélérations dans au moins une dimension ; et le capteur de mouvement (210) comprend en outre un émetteur configuré pour émettre un signal de capteur sans fil (S_{w}) reflétant les mesures effectuées par le premier élément de capteur ; et
le système de mesure comprend un récepteur (230) configuré pour recevoir le signal de capteur sans fil (S_{w}), **caractérisé en ce que** le capteur de mouvement (210) est configuré pour :
vérifier si une quantité de micro-mouvements (µM) est inférieure à une valeur seuil, et si tel est le cas
émettre le signal de capteur sans fil (S_{w}) de manière répétée à une première fréquence de répétition (f₁), et si la quantité de micro-mouvements (µM) est égale ou supérieure à la valeur seuil
émettre le signal de capteur sans fil (S_{w}) de manière répétée à une fréquence de répétition (f₂, f₃) supérieure à la première fréquence de répétition (f₁).

2. Système de mesure selon la revendication 1, dans lequel le capteur de mouvement (210) est en outre configuré pour :
vérifier si la quantité de micro-mouvements (µM) de la première unité émettrice (210) passe d'une valeur inférieure à la valeur seuil à une valeur supérieure à la valeur seuil et si tel est le cas
émettre le signal de capteur sans fil (S_{w}) à partir du capteur de mouvement (210) de manière répétée à une deuxième fréquence de répétition (f₂), et à condition que, pendant un intervalle prédéterminé (T), par la suite la quantité de micro-mouvements (µM) du mouvement le capteur (210) soit supérieure à la valeur seuil
continuer à émettre le signal de capteur sans fil (S_{w}) à partir du capteur de mouvement (210) de manière répétée à la deuxième fréquence de répétition jusqu'à l'expiration de l'intervalle prédéterminé (T), et par la suite
émettre le signal de capteur sans fil (S_{w}) à partir du capteur de mouvement (210) de manière répétée à une troisième fréquence de répétition (f₃) entre les première et deuxième fréquences de répétition (f₁, f₂) tant que la quantité de micro-mouvements (µM) du capteur de mouvement (210) reste une valeur inférieure à la valeur seuil, et si la quantité de micro-mouvements (µM) du capteur de mouvement (210) passe d'une valeur supérieure à la valeur seuil à une valeur inférieure à la valeur seuil
émettre le signal de capteur sans fil (S_{w}) à partir du capteur de mouvement (210) de manière répétée à la première fréquence de répétition (f₁).

3. Système de mesure selon l'une quelconque des revendications précédentes, comprenant en outre :
une unité de traitement (150) configurée pour dériver des informations relatives au fonctionnement (I_{OR}) sur la base du signal de capteur sans fil (S_{w}) reçu par le récepteur (230).

4. Système de mesure selon la revendication 3, dans lequel l'unité de traitement (150) est en outre configurée pour faire varier un comportement de la salle de traite rotative (100) en réponse aux informations relatives au fonctionnement. (I_{OR}).

5. Système de mesure selon l'une quelconque des revendications 3 ou 4, dans lequel l'unité de traitement (150) est en outre configurée pour :
stocker une série de valeurs de mesure représentant le signal de capteur sans fil (S_{w}) reçu sur un intervalle de temps, et
dériver une signature de mouvement (S) de la plateforme mobile (110) sur la base de la série de valeurs de mesure.

6. Système de mesure selon la revendication 5, dans lequel le système de mesure est configuré de telle sorte que la signature de mouvement (S) reflète au moins l'un parmi :
un comportement de démarrage (310), un comportement d'arrêt (320), des vibrations, des oscillations (330) et des variations de charge.

7. Système de mesure selon l'une quelconque des revendications précédentes, dans lequel le capteur de mouvement (210) comprend :
un second élément de capteur configuré pour effectuer des mesures d'au moins l'un parmi :
des déplacements dans au moins une dimension étant indépendante de l'au moins une dimension dans laquelle le premier élément capteur est configuré pour mesurer des déplacements, et
des accélérations dans au moins une dimension étant indépendante de l'au moins une dimension dans laquelle le premier élément capteur est configuré pour mesurer des accélérations ; et
le signal de capteur sans fil (S_{w}) émis par le capteur de mouvement (210) reflète en outre les mesures effectuées par le second élément de capteur.

8. Système de mesure selon l'une quelconque des revendications 1 à 6, dans lequel :
le capteur de mouvement (210) comprend un second élément de capteur :
les premier et second éléments de capteur sont configurés pour effectuer des mesures d'au moins l'un parmi : des déplacements en trois dimensions et des accélérations en trois dimensions ; et
le signal de capteur sans fil (S_{w}) émis par le capteur de mouvement (210) reflète en outre les mesures effectuées par le second élément de capteur.

9. Procédé de mesure des mouvements d'une plateforme mobile (110) incluse dans une salle de traite rotative (100), le procédé comprenant :
l'enregistrement des micro-mouvements (µM) de la plateforme mobile (110) par rapport à un cadre de référence fixe par l'intermédiaire d'un capteur de mouvement (210) disposé sur la plateforme mobile (110),
la mesure, par l'intermédiaire d'un premier élément de capteur dans le capteur de mouvement (210), d'au moins l'un parmi : des déplacements dans au moins une dimension, et des accélérations dans au moins une dimension ;
l'émission, par l'intermédiaire d'un émetteur dans le capteur de mouvement (210), d'un signal de capteur sans fil (S_{w}) réfléchissant les mesures du premier élément de capteur ; et
la réception, par l'intermédiaire d'un récepteur (230), du signal de capteur sans fil (S_{w}), **caractérisé par**
la vérification du fait qu'une quantité de micro-mouvements (µM) est inférieure à une valeur seuil, et si tel est le cas
l'émission du signal de capteur sans fil (S_{w}) de manière répétée à une première fréquence de répétition (f₁), et si la quantité de micro-mouvements (µM) est égale ou supérieure à la valeur seuil
l'émission du signal de capteur sans fil (S_{w}) de manière répétée à une fréquence de répétition (f₂, f₃) supérieure à la première fréquence de répétition (f₁).

10. Procédé selon la revendication 9, comprenant :
la vérification du fait que la quantité de micro-mouvements (µM) du capteur de mouvement (210) passe d'une valeur inférieure à la valeur seuil à une valeur supérieure à la valeur seuil et si tel est le cas
l'émission du signal de capteur sans fil (S_{w}) à partir du capteur de mouvement (210) de manière répétée à une deuxième fréquence de répétition (f₂), et à condition que, pendant un intervalle prédéterminé (T), par la suite la quantité de micro-mouvements (µM) du mouvement le capteur (210) soit supérieure à la valeur seuil
la poursuite d'émission du signal de capteur sans fil (S_{w}) à partir du capteur de mouvement (210) de manière répétée à la deuxième fréquence de répétition jusqu'à l'expiration de l'intervalle prédéterminé (T), et par la suite
l'émission du signal de capteur sans fil (S_{w}) à partir du capteur de mouvement (210) de manière répétée à une troisième fréquence de répétition (f₃) entre les première et deuxième fréquences de répétition (f₁, f₂) tant que la quantité de micro-mouvements (µM) du capteur de mouvement (210) reste supérieure à la valeur seuil, et si la quantité de micro-mouvements (µM) du capteur de mouvement (210) passe d'une valeur supérieure à la valeur seuil à une valeur inférieure à la valeur seuil
l'émission du signal de capteur sans fil (S_{w}) à partir du capteur de mouvement (210) de manière répétée à la première fréquence de répétition (f₁).

11. Procédé selon l'une quelconque des revendications 9 à 10, comprenant en outre :
la dérivation d'informations relatives au fonctionnement (I_{OR}) sur la base du signal de capteur sans fil (S_{w}) reçu par le récepteur (230).

12. Procédé selon la revendication 11, comprenant en outre :
la variation d'un comportement de la salle de traite rotative (100) en réponse aux informations relatives au fonctionnement (I_{OR}).

13. Procédé selon l'une quelconque des revendications 11 ou 12, comprenant en outre :
le stockage d'une série de valeurs de mesure représentant le signal de capteur sans fil (S_{w}) reçu sur un intervalle de temps, et
la dérivation d'une signature de mouvement (S) de la plateforme mobile (110) sur la base de la série de valeurs de mesure.

14. Procédé selon la revendication 13, dans lequel la signature de mouvement reflète au moins l'un parmi :
un comportement de démarrage, un comportement d'arrêt, des vibrations, des oscillations et des variations de charge.

15. Procédé selon l'une quelconque des revendications 9 à 14, comprenant :
la mesure, par l'intermédiaire d'un second élément capteur dans le capteur de mouvement (210), d'au moins l'un parmi :
des déplacements dans au moins une dimension étant indépendante de l'au moins une dimension dans laquelle le premier élément capteur est configuré pour mesurer les déplacements, et
des accélérations dans au moins une dimension étant indépendante de l'au moins une dimension dans laquelle le premier élément capteur est configuré pour mesurer des accélérations ; et le signal de capteur sans fil (S_{w}) émis depuis le capteur de mouvement (210) reflétant en outre les mesures du second élément de capteur.

16. Procédé selon la revendication 15, comprenant :
la mesure, par l'intermédiaire des premier et second éléments de capteur, d'au moins l'un parmi : des déplacements en trois dimensions et des accélérations en trois dimensions.

17. Programme informatique (157) chargeable dans un support de données non volatile (155) connecté en communication avec une unité de traitement (150) d'un système de mesure, le programme informatique (157) comprenant un logiciel permettant d'exécuter le procédé selon l'une quelconque des revendications 9 à 16 lorsque le programme informatique (157) est exploité sur l'unité de traitement (150) du système de mesure.
